# EUROPÄISCHE PATENTSCHRIFT

(11) **EP 1 328 456 B1**
(45) Veröffentlichungstag und Bekanntmachung des Hinweises auf die Patenterteilung: **29.12.2004**
(21) Anmeldenummer: 01976297.0
(22) Anmeldetag: 10.10.2001
(51) Int. Cl.: B65G 1/14

(54) **HORIZONTALE STAPELSÄULE**
HORIZONTAL STACKING COLUMN
COLONNE D'EMPILAGE HORIZONTALE

(30) Priorität: 27.10.2000 DE 10053268
(43) Veröffentlichungstag der Anmeldung: 23.07.2003
(73) Patentinhaber: MTS Maschinenbau GmbH, 88512 Mengen (DE)
(72) Erfinder: STROBEL, Gustav, 88348 Saulgau (DE)
(74) Vertreter: Weiss, Peter, Dr.
(86) Internationale Anmeldenummer: PCT/EP2001/011740
(87) Internationale Veröffentlichungsnummer: WO 2002/034649

(56) Entgegenhaltungen:
- EP-A- 0 536 571
- DE-A- 4 020 864
- US-A- 4 549 663

## Beschreibung

Die Erfindung betrifft eine horizontale Stapelsäule zum Lagern von Lagergütern nebeneinander in gegenseitigen Abständen auf zweiarmigen Klinkenhebeln, welche an zwischen zwei Wandstreifen angeordneten Drehachsen drehbar gelagert sind und einerseits ein Tragarm zum Halten des Lagergutes und andererseits einen Steuerarm aufweisen.

Derartige Stapelsäulen dienen insbesondere zur Aufnahme von flächigen Ladegütern, wie sie bspw. bei der Herstellung von Automobilteilen anfallen. Es gibt aber noch eine Vielzahl anderer Anwendungsbereiche, die von der vorliegenden Erfindung umfasst sein sollen.

In der Regel handelt es sich dabei um vertikal ausgerichtete Stapelsäulen, wie sie bspw. in der DE 38 11 310 aufgezeigt sind.

Im Stand der Technik sind auch schräge Stapelsäulen bekannt, bspw. in der EP 0 536 571. Hierbei sind zwei Wandstreifen in einem spitzen Winkel mit eine Grundfläche, Grundplatte od. dgl. verbunden. Die Klinkenhebel sind zwischen den beiden Wandstreifen aufeinanderfolgend vertikal in der gleichen Richtung seitlich versetzt an den Drehachsen angeordnet.

Aus der DE 40 20 864 C2 ist aber eine horizontal angeordnete Stapelsäule bzw. Lagerschiene der o. g. Art bekannt, bei welcher die Wandstreifen nebeneinander, vertikal ausgerichtet angeordnet sind. Die Drehachse für die Klinke befindet sich zwischen den beiden Wandstreifen und liegt in etwa horizontal. In Gebrauchslage ragen die Klinken nach oben aus den Wandstreifen heraus. Die Klinke weist Steuerelemente auf, mit denen jeweils eine nachfolgende Klinke in Bereitschaftsstellung gebracht wird.

In manchen Fällen besteht der Wunsch, dass das zu lagernde Gut nicht auf den Wandstreifen aufstehen soll und dass die Klinkenhebel das Lagergut seitlich angreifen sollen. Für diesen Fall ist die eben beschriebene horizontale Stapelsäule ungeeignet.

Der vorliegenden Erfindung liegt die Aufgabe zugrunde, eine horizontale Stapelsäule der o. g. Art zu entwickeln, bei welcher das Lagergut nicht mit den Wandstreifen in Berührung kommt, insbesondere nicht auf den Wandstreifen aufsteht und bei welcher das Lagergut seitlich von den Klinkenhebeln angegriffen wird.

Zur Lösung dieser Aufgabe führt, dass die Drehachsen mit den Wandstreifen einen spitzen Winkel einschliessen und die Wandstreifen parallel und waagrecht übereinander angeordnet sind.

Das bedeutet, dass der Klinkenhebel insgesamt etwa schräg gestellt ist.

Der wesentliche Vorteil der vorliegenden Erfindung liegt darin, dass die Klinkenhebel selbsttätig wieder in ihre Ruhelage zurückfallen. Bevorzugt weist der Steuerarm ein höheres Gewicht als der Tragarm auf. Zu diesem Zweck kann der Steuerarm selbst zusätzlich mit einem höheren Gewicht versehen sein, insbesondere, wenn es sich bei dem Klinkenhebel um einen solchen aus Kunststoff bzw. Aluminium handelt. In diesem Fall kann der Steuerarm mit einem Metallstück mit höherem Gewicht versehen werden. Durch die schräge Anordnung des Klinkenhebels wird gewährleistet, dass dieser nach Entnahme des Lagergutes wieder in seine Ruhelage zurückfällt. Lediglich beim ersten Klinkenhebel wird dies durch einen Anschlagstift vermieden, so dass der erste Klinkenhebel immer in Bereitschaftsstellung gehalten wird.

Wie das Zusammenwirken der einzelnen Klinkenhebel geschieht, damit immer bei Verschwenken des einen Klinkenhebels in die Arbeitsstellung der nachfolgende Klinkenhebel in die Bereitschaftsstellung gelangt, spielt im vorliegenden Fall keine Rolle. Hier sind im Stand der Technik viele Möglichkeiten aufgezeigt, die von der vorliegenden Erfindung umfasst sein sollen.

Zusätzlich ist bei der vorliegenden Erfindung auch ein Sensor zum Erkennen des Beladungszustandes der Stapelsäule vorgesehen. In dem Augenblick, wo der letzte Klinkenhebel in die Arbeitsstellung schwenkt, wird dies von einem Sensor ermittelt. Bspw. kann es sich hier um ein einfaches Loch in einer Stirnfläche der Stapelsäule handeln, welches von einem von dem letzten Klinkenhebel betätigten Winkel oder von diesem selbst verschlossen bzw. abgedunkelt wird. Dies wird dann von einem optischen bzw. mechanischen Sensor erkannt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht eines Teils einer erfindungsgemässen Stapelsäule;
Figur 2 eine Draufsicht auf die Stapelsäule gemäss Figur 1;
Figur 3 eine Ansicht der Stapelsäule entsprechend Figur 2, jedoch nach Entfernung eines oberen Wandstreifens;
Figur 4 eine Ansicht der Stapelsäule entsprechend Figur 3, jedoch in einer weiteren Gebrauchslage;
Figur 5 eine Draufsicht eines Wandstreifens vor dem Einsetzen von Klinkenhebeln und entsprechender Befestigungselemente;
Figur 6 eine Draufsicht auf ein Befestigungselement für Klinkenhebel und ggf. Anschlagstift.

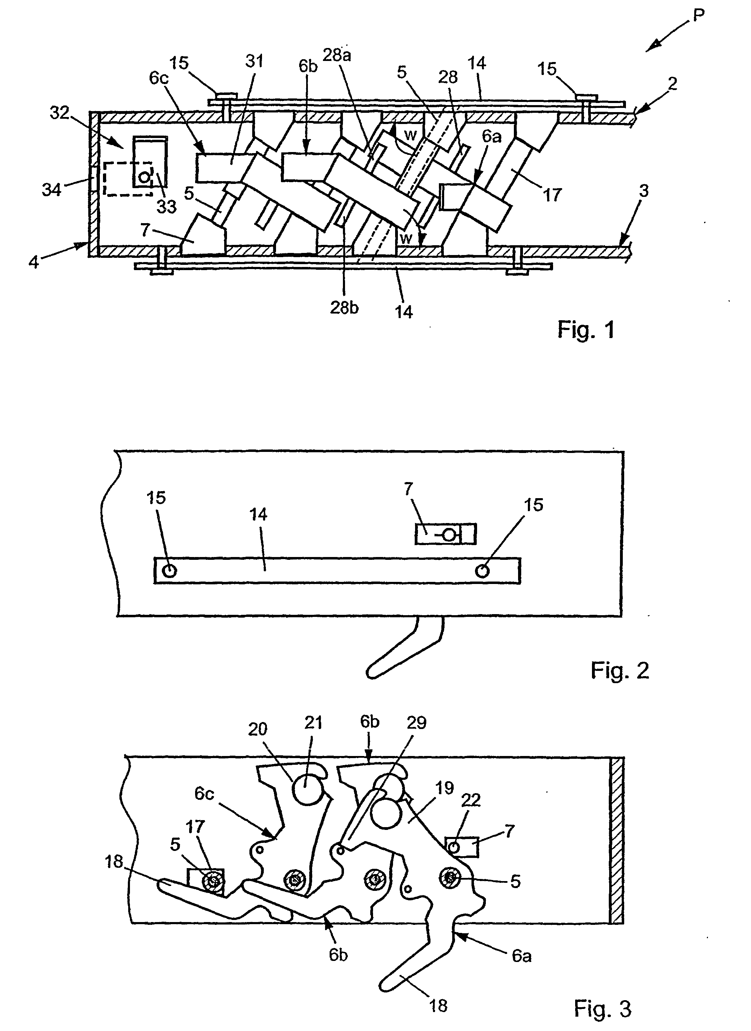

Gemäss Figur 1 sind zwei Wandstreifen 2 und 3 parallel waagrecht übereinander angeordnet und endseits durch Stirnwände 4 miteinander verbunden. Die Wandstreifen 2 und 3 werden in gewissen Abständen voneinander von Drehachsen 5 durchsetzt, welche mit den Wandstreifen 2 und 3 spitze Winkel w einschliessen. Auf diese Weise sind die Drehachsen 5 schräggestellt.

Im vorliegenden Ausführungsbeispiel sind nur vier Drehachsen 5 gezeigt, wobei sich die Anzahl der Drehachsen 5 beliebig vergrössern lässt und von der Länge der Wandstreifen 2 und 3 abhängig ist.

Jede Drehachse 5 hält einen Klinkenhebel 6, wobei im vorliegenden Ausführungsbeispiel drei Klinkenhebel 6a, 6b und 6c dargestellt sind. Die Klinkenhebel dienen der Halterung von einem nicht näher gezeigten Lagergut.

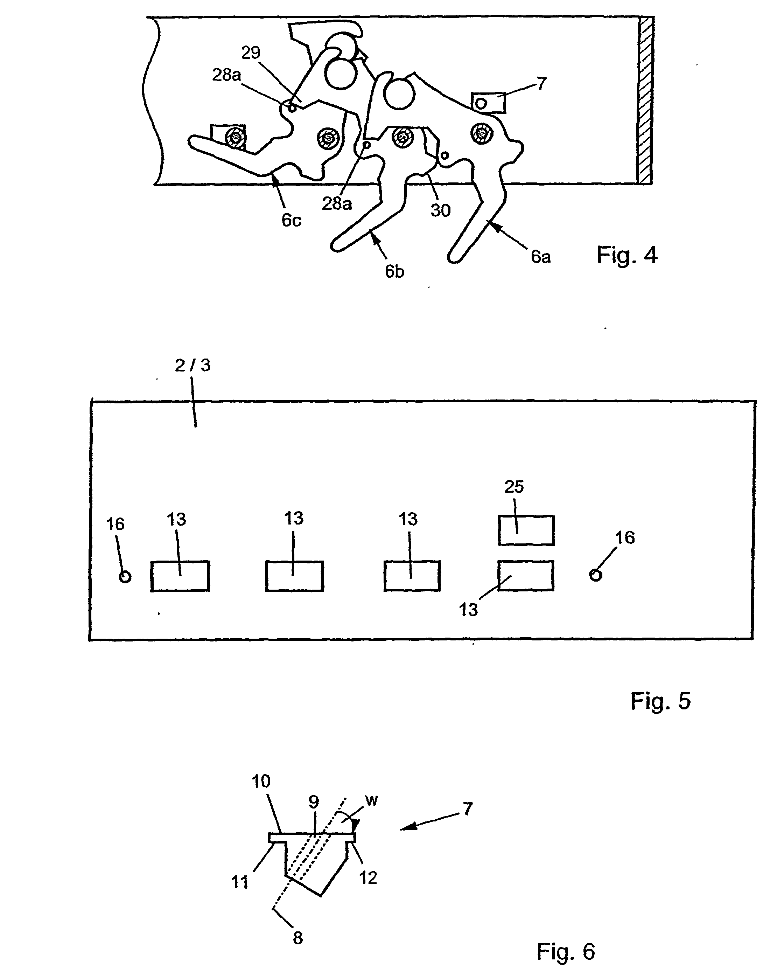

Zur Befestigung der Drehachsen 5 dienen Befestigungselemente 7, wie sie insbesondere in Figur 6 gezeigt sind. Jedes Befestigungselement 7 weist eine Bohrung 9 auf, in welche in Gebrauchslage die Drehachse 5 eingesetzt wird. Diese Bohrung 9 besitzt eine Achse B, welche im Winkel w zu einer Rückwand 10 bzw. zu Anschlagflächen 11 und 12 verläuft, welche von Schultern des Befestigungselementes 7 gebildet werden.

In Gebrauchslage werden derartige Befestigungselemente 7 in entsprechende Ausnehmungen 13 jedes Wandstreifens 2 bzw. 3 eingesetzt, wobei die Anschlagflächen 11 und 12 von aussen her diesen Wandstreifen 2 und 3 anliegen und somit auch die Einsetztiefen des Befestigungselements 7 begrenzen. Zwei sich gegenüberliegende Befestigungslemente 7 sind dabei um 180° zueinander verdreht in die Ausnehmungen 13 eingesetzt. Zwischen ihnen erstreckt sich die Drehachse 5.

Der Festlegung einer Mehrzahl von Befestigungselementen 7 dient eine Leiste 14, welche in Gebrauchslage der Rückwand 10 einer Mehrzahl von Befestigungselementen 7 anliegt und durch entsprechende Schrauben 15 mit den Wandstreifen 2 bzw. 3 verbunden ist. Dabei greifen diese Schrauben 15 in entsprechende Bohrungen 16 (Figur 5) mit Innengewinde ein. Selbstverständlich ist auch denkbar, dass die Befestigungselemente geklebt oder sonstwie an den Wandstreifen festgelegt werden.

Die Befestigungselemente 7 erlauben ein schnelles und gleiches Anordnen der Drehachsen 5, wobei vor allem der Zusammenbau wesentlich erleichtet ist. Die Befestigungselemente 7 werden in die Ausnehmungen 13 eingesetzt. Sobald ein Befestigungselement 7 von der einen Seite in seine Ausnehmung 13 eingesetzt ist, erfolgt ein Einschieben der Drehachse 5 in die Bohrung 9, darauf wird eine Abstandshülse 17 auf die Drehachse 5 aufgeschoben und danach der Klinkenhebeln 6 auf den freien Bereich der Drehachse 5 aufgesetzt. Von der anderen Seite wird dann ein ensprechendes, um 180° gedrehtes Befestigungselement 7 in die entsprechende Ausnehmung 13 eingesetzt und nimmt die Drehachse 5 in seiner Bohrung 9 auf. Nachdem eine Mehrzahl von Klinkenhebel 6 auf diese Weise entlang der Stapelsäule P angeordnet sind, werden die Befestigungselement 7 bzw. eine bestimmte Anzahl von Befestigungselementen 7 durch die Leisten 14 endgültig in ihrer Lage fixiert.

In den Figuren 3 und 4 ist erkennbar, dass jeder Klinkenhebel aus einem Tragarm 18 und einem Steuerarm 19 besteht. Die Arme 18 bzw. 19 sind jeweils auf einer Seite der Drehachse 5 angeordnet. Hierbei besitzt der Steuerarm 19 jedoch ein höheres Gewicht als der Tragarm 18, wobei hier zusätzlich in eine entsprechende Ausnehmung 20 des Steuerarms 19 ein zusätzliches Gewicht 21 eingesetzt sein kann. Der Einfachheit halber ist die Ausnehmung 20 durch eine Bohrung in dem Steuerarm 19 gebildet, wobei die Ausnehmung offen ist. Hierbei kann der Steuerarm bei Passungenauigkeiten mit dem Gewicht 21 in begrenztem Umfange nachgeben, so dass das Einsetzen des Gewichtes 21 durch Eindrücken des Gewichtes 21 in die Ausnehmung 20 erleichtert ist.

Durch die Gewichtsverteilung bzw. das zusätzliche Gewicht 21 wird bewirkt, dass jeder Klinkenhebel bis auf den ersten Klinkenhebel 6a sich normalerweise in Ruhestellung befindet, wie dies für die Klinkenhebel 6b und 6c in Figur 3 angedeutet ist. In dieser Ruhestellung werden die Klinkenhebel 6b und 6c dadurch gehalten, dass der Tragarm 18 entweder an einem daneben liegenden Befestigungselement 7 oder aber an der Drehachse 5 bzw. der Abstandshülse 17 anschlägt. In dieser Ruhestellung verschwindet in jedem Fall der Klinkenhebel 6b bzw. 6c zwischen die Wandstreifen 2 und 3, so dass ein Bestücken der Stapelsäule P nicht gestört ist.

Der erste Klinkenhebel 6a befindet sich dagegen in jedem Fall in Bereitschaftsstellung, in welcher der Tragarm 18 aus dem Bereich der Wandstreifen 2 bzw. 3 ausgeschwenkt ist. Zur Halterung des Klinkenhebels 6a in dieser Bereitschaftsstellung ist ein Anschlagstift 22 vorgesehen, der ebenfalls zwischen den beiden Wandstreifen 2 und 3 von bspw. Befestigungselementen 7 (siehe Figur 6) in einer Ausnehmung 25 (siehe Figur 5) gehalten ist.

Jeder Klinkenhebel 6 weist ferner einen Steuerstift 28 auf, welcher den Klinkenhebel 6 durchquert und beidseits überragt. Der eine Teil 28a des Steuerstiftes 28 wirkt mit dem einen folgenden Klinkenhebel und der andere Teil 28b mit dem anderen folgenden Klinkenhebel zusammen. Erkennbar ist, dass der unterste Klinkenhebel 6a mit einer Nase 29 seines Steuerarmes 19 mit dem einen Teil 28a des Steuerstiftes 28 des nachfolgenden Klinkenhebels 6b zusammenwirkt. Wird der erste Klinkenhebel 6a von seiner Bereitsschaftsstellung in eine Arbeitsstellung geschwenkt, wie dies in Figur 4 angedeutet ist, so drückt die Nase 29 auf den Steuerstift 28a und schwenkt dabei den nachfolgenden Klinkenhebel 6b in Bereitschaftsstellung.

Wird nun dieser Klinkenhebel 6b mit einem Ladegut belegt, so schwenkt er ebenfalls in Arbeitsstellung, wobei dann die Nase 29 seines Steuerarmes 19 wiederum auf den Steuerstift 28a drückt und dabei den nachfolgenden Klinkenhebel 6c in Bereitschaftsstellung schwenkt. Gleichzeitig aber übergreift der Klinkenhebel 6b mit einer Steuerkante 30 den anderen Teil 28b des Steuerstiftes 28 des untersten Klinkenhebels 6a und drückt auf diesen, so dass dieser erste Klinkenhebel in seiner Arbeitsstellung fixiert ist.

Wird ferner dann der Klinkenhebel 6c beladen, so wirkt dessen Steuerkante zur Verriegelung mit dem Steuerstift 28 des Klinkenhebels 6b zusammen. Diese Funktionsweise lässt sich beliebig fortsetzen.

Beim Entladen erfolgt durch das Zurückfallen des jeweiligen Klinkenhebels auch ein sofortiges Entriegeln des nachfolgenden Klinkenhebels, so dass dieser wiederum beim Entladen in seine Bereitschaftsstellung und danach in seine Ruhestellung zurückfallen kann.

Zur besseren Anlage des Ladegutes an den Klinkenhebel sollte, wie in Figur 1 dargestellt, zumindest ein Teil 31 des Klinkenhebels abgekröpft ausgebildet sein, so dass dieser Teil eine etwa ebene Anlagefläche ausbildet. Im übrigen kommt es aber bei der Ausgestaltung des Klinkenhebels im wesentlichen auch auf die Form des zu haltenden Ladegutes an.

In Figur 1 ist ferner ein Sensor 32 angedeutet, über den der Beladungszustand der Stapelsäule P ermittelt werden kann. Im gezeigten Ausführungsbeispiel handelt es sich bei dem Sensor 32 um einen Winkel 33, welcher vor ein Loch 34 in der Stirnwand 4 geschwenkt werden kann. Hierdurch wird das Loch 34 geschlossen bzw. verdunkelt, so dass sowohl ein optischer als auch ein mechanischer Sensor ermitteln kann, in welchem Beladungszustand sich die Stapelsäule P befindet. Das Schwenken des Winkels 33 kann bspw. durch einen Hebel bewirkt werden, der mit dem letzten Klinkenhebel verbunden ist. Der letzte Klinkenhebel kann auch ein sonstiges Element zum Auslösen des Schwenkens des Winkels betätigen. Es ist sogar daran gedacht, dass bspw. ein Teil des Steuerarms des letzten Klinkenhebels so ausgestaltet ist, dass er in Arbeitsstellung das Loch 34 verschliesst.

| **Positionszahlenliste** | | | | | |
|---|---|---|---|---|---|
| 1 | | 34 | Loch | 67 | |
| 2 | Wandstreifen | 35 | | 68 | |
| 3 | Wandstreifen | 36 | | 69 | |
| 4 | Stirnwand | 37 | | 70 | |
| 5 | Drehachse | 38 | | 71 | |
| 6 | Klinkenhebel | 39 | | 72 | |
| 7 | Befestigungselement | 40 | | 73 | |
| 8 | | 41 | | 74 | |
| 9 | Bohrung | 42 | | 75 | |
| 10 | Rückwand | 43 | | 76 | |
| 11 | Anschlagfläche | 44 | | 77 | |
| 12 | Anschlagfläche | 45 | | 78 | |
| 13 | Ausnehmung | 46 | | 79 | |
| 14 | Leiste | 47 | | | |
| 15 | Schrauben | 48 | | | |
| 16 | Bohrung | 49 | | | |
| 17 | Abstandshülse | 50 | | | |
| 18 | Tragarm | 51 | | | |
| 19 | Steuerarm | 52 | | | |
| 20 | Ausnehmung | 53 | | | |
| 21 | Gewicht | 54 | | | |
| 22 | Anschlagstift | 55 | | | |
| 23 | | 56 | | | |
| 24 | | 57 | | | |
| 25 | Ausnehmung | 58 | | | |
| 26 | | 59 | | P | Stapelsäule |
| 27 | | 60 | | | |
| 28 | Steuerstift | 61 | | W | Winkel |
| 29 | Nase | 62 | | | |
| 30 | Steuerkante | 63 | | | |
| 31 | Teil | 64 | | | |
| 32 | Sensor | 65 | | | |
| 33 | Winkel | 66 | | | |

## Patentansprüche

1. Horizontale Stapelsäule zum Lagern von Lagergütern nebeneinander in gegenseitigen Abständen auf zweiarmigen Klinkenhebeln (6a, 6b, 6c), welche an zwischen zwei Wandstreifen (2, 3) angeordneten Drehachsen (5) drehbar gelagert sind und einerseits einen Tragarm (18) zum Halten des Lagergutes und andererseits einen Steuerarm (19) aufweisen,
**dadurch gekennzeichnet,**
**dass** die Drehachsen (5) mit den Wandstreifen (2, 3) einen spitzen Winkel (w) einschliessen und die Wandstreifen (2, 3) parallel und waagrecht übereinander angeordnet sind.

2. Stapelsäule nach Anspruch 1, **dadurch gekennzeichnet, dass** der Steuerarm (19) ein höheres Gewicht aufweist, als der Tragarm (18)

3. Stapelsäule nach Anspruch 1 oder 2, **dadurch gekennzeichnet, dass** der Tragarm (18) einen waagrecht verlaufenden, abgekröpften Teil (31) aufweist.

4. Stapelsäule nach einem der Ansprüche 1 bis 3, **dadurch gekennzeichnet, dass** ein Sensor (32) zum Erkennen des Beladungszustandes der Stapelsäule (P) vorgesehen ist.

5. Stapelsäule nach Anspruch 4, **dadurch gekennzeichnet, dass** in eine Stirnwand (4) ein Loch (34) eingeformt ist, dem ein Schieber, Winkel (33) od. dgl. zum Verschliessen zugeordnet ist.

## Claims

1. Stacking column for the storage of articles to be stored adjacent one another at mutual spacings on two-armed ratchet levers (6a, 6b, 6c), which are rotatably mounted on rotary axles (5) disposed between two wall strips (2, 3) and have, at one end, a carrier arm (18) for retaining the article to be stored and, at the other end, a control arm (19), **characterised in that** the rotary axles (5) form an acute angle (w) with the wall strips (2, 3), and the wall strips (2, 3) are disposed in a parallel and horizontal manner one above the other.

2. Stacking column according to claim 1, **characterised in that** the control arm (19) has a greater weight than the carrier arm (18).

3. Stacking column according to claim 1 or 2, **characterised in that** the carrier arm (18) has a horizontally extending, bent portion (31).

4. Stacking column according to one of claims 1 to 3, **characterised in that** a sensor (32) is provided for detecting the load position of the stacking column (P).

5. Stacking column according to claim 4, **characterised in that** an aperture (34) is provided in an end wall (4), and a slide means, bracket (33) or the like is associated with said aperture for closing purposes.

## Revendications

1. Colonne d'empilage horizontale destinée à stocker des produits l'un à côté de l'autre à des distances réciproques sur des leviers à poignée à deux bras (6a, 6b, 6c) qui sont montés de manière rotative sur des axes de rotation (5) disposés entre deux bandes de paroi (2, 3) et présentent, d'une part, un bras de support (18) destiné à maintenir le produit et, d'autre part, un bras de commande (19),
**caractérisé par le fait**
**que** les axes de rotation (5) forment, par rapport aux bandes de paroi (2, 3), un angle aigu (w) et que les bandes de paroi (2, 3) sont disposées de manière parallèle et horizontale l'une au-dessus de l'autre.

2. Colonne d'empilement selon la revendication 1, **caractérisée par le fait que** le bras de commande (19) présente un poids supérieur à celui du bras de support (16).

3. Colonne d'empilement selon la revendication 1 ou 2, **caractérisée par le fait que** le bras de support (18) présente une partie coudée s'étendant horizontalement (31).

4. Colonne d'empilement selon l'une des revendications 1 à 3, **caractérisée par le fait qu'**un capteur (32) est prévu pour détecter l'état de chargement de la colonne d'empilement (P).

5. Colonne d'empilement selon la revendication 4, **caractérisée par le fait que** dans une paroi frontale (4) est formé un trou (34) auquel est associé un curseur, une équerre (33) ou autre pour obturer.
